# EUROPEAN PATENT APPLICATION

(11) **EP 4 840 839 A1**
(43) Date of publication of application: **18.11.2026**
(21) Application number: 25841156.0
(22) Date of filing: 16.07.2025
(51) Int. Cl.: C04B 35/5831, B23B 27/14, B23B 27/20

(54) **CUBIC BORON NITRIDE SINTERED BODY, METHOD FOR PRODUCING SAME, AND TOOL**

(30) Priority: 19.07.2024 JP 2024115777
(71) Applicant: Resonac Corporation, Tokyo 105-7325 (JP)
(72) Inventor: OZAWA, Hiromitsu, Tokyo 105-7325 (JP); NOGUCHI, Tsukasa, Tokyo 105-7325 (JP); NAKAJIMA, Takumi, Tokyo 105-7325 (JP)
(74) Representative: Strehl & Partner mbB
(86) International application number: PCT/JP2025/025514
(87) International publication number: WO 2026/018883

(57) **Abstract**

Provided are: a cubic boron nitride sintered body; a method for producing the same; and a tool. The cubic boron nitride sintered body includes cubic boron nitride and a binder phase constituting a balance excluding the cubic boron nitride; a content of the cubic boron nitride in the cubic boron nitride sintered body being 50.0 to 90.0% by volume; the binder phase including one or more selected from the group consisting of a carbide of Ti, a nitride of Ti, a carbonitride of Ti, and a boride of Ti, and one or more selected from the group consisting of W₂B and W₂CoB₂; and a ratio of a sum of I_{B} and I_{C} to I_{A}, [(I_{B}+I_{C})/I_{A}], being 0.25 or more in an X-ray diffraction pattern of the cubic boron nitride sintered body obtained using a CuKα radiation as a radiation source, wherein I_{A} is an intensity of a diffraction peak assigned to a (111) plane of the cubic boron nitride, I_{B} is an intensity of a diffraction peak assigned to a (211) plane of the W₂B, and I_{C} is an intensity of a diffraction peak with a greater intensity in diffraction peaks assigned to a (211) plane and a (310) plane of the W₂CoB₂.

## Description

### Technical Field

The present embodiment relates to a cubic boron nitride sintered body, a method for producing the same, and a tool.

### Background Art

Cubic boron nitride (hereinafter also referred to as "cBN") is a substance with hardness comparable to that of diamond, and a cBN sintered body, which includes sintered cBN particles as a main component, is a material that exhibits both properties of wear resistance and chipping resistance. Consequently, the cBN sintered body is primarily used in cutting tools for difficult-to-machine materials such as high-hardness steels. In addition, according to the purpose of machining and the various use modes of cutting tools, improvements of the cBN sintered body are underway to meet the demand for further enhanced chipping resistance.

For example, PTL1 discloses that the cBN sintered body exhibiting superior strength and heat resistance is obtained when W, Co, and Ni that are metal components present in the form of compounds in the cBN sintered body are such that the ratio of the weight of W to the total weight of W, Co, and Ni is 0.2 to 0.6, and that the ratio of the weight of Co to the total weight of Co and Ni is 0.6 to 0.95.

### Citation List

### Patent Literature

PTL1: WO 2000/047537 A

### Summary of Invention

### Technical Problem

Incidentally, in recent years, work materials have been remarkably become difficult to machine for weight reduction measures, and also, machining speeds have been substantially increased to reduce machining costs. Accordingly, the performance requirements for tools including cBN sintered bodies (hereinafter also referred to as "cBN tools") have also become more stringent.

Considering such a current situation, an objective of the present embodiment is to provide a cBN sintered body that exhibits superior chipping resistance, a method for producing the same, and a tool.

### Solution to Problem

As a result of intensive studies to solve the above problems, the present inventors have found out that the above problems can be solved by the present embodiments below.
[1] A cubic boron nitride sintered body comprising cubic boron nitride and a binder phase constituting a balance excluding the cubic boron nitride,
   a content of the cubic boron nitride in the cubic boron nitride sintered body being 50.0 to 90.0% by volume,
   the binder phase comprising one or more selected from the group consisting of a carbide of Ti, a nitride of Ti, a carbonitride of Ti, and a boride of Ti, and one or more selected from the group consisting of W₂B and W₂CoB₂, and
   a ratio of a sum of I_{B} and I_{C} to I_{A}, [(I_{B}+I_{C})/I_{A}], being 0.25 or more in an X-ray diffraction pattern of the cubic boron nitride sintered body obtained using a CuKα radiation as a radiation source, wherein
   I_{A} is an intensity of a diffraction peak assigned to a (111) plane of the cubic boron nitride,
   I_{B} is an intensity of a diffraction peak assigned to a (211) plane of the W₂B, and
   I_{C} is an intensity of a diffraction peak with a greater intensity in diffraction peaks assigned to a (211) plane and a (310) plane of the W₂CoB₂.
[2] The cubic boron nitride sintered body according to the above [1], wherein a content of W in the cubic boron nitride sintered body is 4.00 to 15.00% by mass.
[3] The cubic boron nitride sintered body according to the above [1] or [2], wherein a ratio of I_{B} to I_{C}, [I_{B}/I_{C}], is 0.20 to 1.00.
[4] The cubic boron nitride sintered body according to any one of the above [1] to [3], comprising two or more types of cubic boron nitride particles with different average particle diameters (D₅₀).
[5] The cubic boron nitride sintered body according to any one of the above [1] to [4], wherein the cubic boron nitride sintered body has a thermal conductivity of 50.0 W/m·K or more.
[6] A tool comprising the cubic boron nitride sintered body according to any one of the above [1] to [5], as a constituent material.
[7] The tool according to the above [6], intended for machining or grinding.
[8] A method for producing the cubic boron nitride sintered body according to any one of the above [1] to [5], comprising:
   a step of pulverizing a binding material as a raw material for forming the binder phase in a container containing pulverizing media;
   a step of mixing the binding material after pulverizing and cubic boron nitride particles to obtain a raw material mixture; and
   a step of sintering the raw material mixture by pressure-heating treatment, to obtain a cubic boron nitride sintered body;
   wherein the pulverizing media used in the binding material pulverizing step comprises WC.

### Advantageous Effects of Invention

The present embodiment can provide a cBN sintered body that exhibits superior chipping resistance, a method for producing the same, and a tool.

### Brief Description of Drawings

[Fig. 1] Fig. 1 is a XRD pattern of a cBN sintered body obtained in Example 1.
[Fig. 2] Fig. 2 is a XRD pattern of a cBN sintered body obtained in Comparative Example 2.
[Fig. 3] Fig. 3 is a backscattered electron image (×5,000 magnification) of the cBN sintered body obtained in Example 1 using a scanning electron microscope (SEM).
[Fig. 4] Fig. 4 is a binarized image of the backscattered electron image shown in Fig. 3.

### Description of Embodiment

Herein, numerical ranges indicated by "to" signifies a range including the numerical values specified before and after "to" as the minimum and maximum values, respectively.

For example, the notation of the numerical range "X to Y" (X and Y are real numbers) means the numerical range of X or more and Y or less. The description of "X or more" herein means X and numerical values more than X. The description of "Y or less" herein means Y and numerical values less than Y.

The lower and upper limits of a numerical range described herein can be arbitrarily combined with the lower or upper limit of another numerical range.

In the numerical range described herein, the lower or upper limit thereof may be replaced with the values presented in Examples.

Unless otherwise specified, components or materials exemplified herein may be used singly or in combination of two or more thereof.

Herein, when only one type of element symbol such as "W" is written alone, the valence and state of the element are not limited, and it signifies all of the element forming a compound and the element in a metallic state. On the other hand, an element in a metallic state with zero valence is denoted with "metal" before the element symbol, such as "metal W".

Unless otherwise specified, components or materials exemplified herein may be used singly or in combination of two or more thereof.

The expression "including XX" as used herein encompasses both the significance of including XX in a reacted state and the significance of simply including XX, when XX can react.

The mechanism of action described herein is speculative and does not limit the mechanism that achieves the effects of the present embodiment.

The present embodiment also encompasses any combination of the modes described herein.

### [Cubic Boron Nitride Sintered Body]

A cubic boron nitride sintered body of the present embodiment is
a cubic boron nitride sintered body comprising cubic boron nitride and a binder phase constituting a balance excluding the cubic boron nitride,
a content of the cubic boron nitride in the cubic boron nitride sintered body being 50.0 to 90.0% by volume,
the binder phase comprising one or more selected from the group consisting of a carbide of Ti, a nitride of Ti, a carbonitride of Ti, and a boride of Ti, and one or more selected from the group consisting of W₂B and W₂CoB₂, and
a ratio of a sum of I_{B} and I_{C} to I_{A}, [(I_{B}+I_{C})/I_{A}], being 0.25 or more in an X-ray diffraction pattern of the cubic boron nitride sintered body obtained using a CuKα radiation as a radiation source, wherein
I_{A} is an intensity of a diffraction peak assigned to a (111) plane of the cubic boron nitride,
I_{B} is an intensity of a diffraction peak assigned to a (211) plane of the W₂B, and
I_{C} is an intensity of a diffraction peak with a greater intensity in diffraction peaks assigned to a (211) plane and a (310) plane of the W₂CoB₂.

### <cBN>

The content of cBN in the cBN sintered body of the present embodiment is 50.0 to 90.0% by volume, preferably 55.0 to 89.0% by volume, more preferably 63.0 to 88.0% by volume, even more preferably 68.0 to 87.0% by volume, and preferably 73.0 to 85.0% by volume, more preferably 75.0 to 82.0% by volume, even more preferably 76.0 to 80.0% by volume.

When the content of cBN is 50.0% by volume or more, the superior properties of cBN such as high hardness, high oxidation resistance, and high thermal conductivity are exhibited, and also, crack propagation into the interior of the cBN sintered body is suppressed even in the event of microcrack formation, resulting in good chipping resistance. When the content of cBN is 90.0% by volume or less, aggregation between cBN particles is suppressed to facilitate sintering without cBN falling off, resulting in good wear resistance.

Here, the content of cBN in the cBN sintered body is a value determined by considering the occupied area fraction of cBN in the observation image of the polished surface of the cBN sintered body using a scanning electron microscope (SEM) as the volume content, and specifically, it can be determined using the method described in Examples.

An average value of feret diameters of cBN contained in the cBN sintered body of the present embodiment measured from a cross-sectional SEM photograph is preferably 0.3 to 8.0 µm, more preferably 0.4 to 5.0 µm, and even more preferably 0.5 to 2.0 µm.

When the average value of the feret diameters of the cBN is the above-described lower limit or more, the cBN tends to be firmly retained by the binder phase. When the average value of the feret diameters of the cBN is the above-described upper limit or less, the cBN sintered body tends to exhibit superior fracture toughness.

Here, the "feret diameter" herein refers to the longest distance in straight lines connecting arbitrary two points on the outer perimeter of the cBN cross section observed in a cross-sectional photograph of the cBN sintered body.

The average value of the feret diameters of cBN is determined by measuring all measurable feret diameters of cBN in the entire field of view of an observation image at ×5,000 magnification using a scanning electron microscope (SEM) on the polished surface of a cBN sintered body and calculating the arithmetic mean value thereof. Specifically, it can be determined using the method described in Examples.

In view of improving thermal conductivity of the cBN sintered body and further enhancing its wear resistance and chipping resistance, it is preferable that the cBN particles used in the production of the cBN sintered body of the present embodiment have low porosity.

Herein, the "porosity of cBN particles" refers to the porosity calculated solely from the cBN particles used in the production of the cBN sintered body. When using only one type of cBN particles, it refers to the porosity of that one type of cBN particles; and when using two or more types of cBN particles, it refers to the porosity of the mixture of those two or more types of cBN particles.

The porosity of cBN particles can be calculated using the following Ouchiyama expressions based on the particle size distribution of the cBN particles. Details regarding the Ouchiyama expressions are provided in the following references.

N. Ouchiyama and T. Tanaka, Ind. Eng. Chem. Fundam., 19, 338 (1980).

N. Ouchiyama and T. Tanaka, Ind. Eng. Chem. Fundam., 20, 66 (1981).

N. Ouchiyama and T. Tanaka, Ind. Eng. Chem. Fundam., 23, 490 (1984). [Expression 1] $\begin{matrix}{ϕ}_{m} = \frac{{\sum }_{i = 1}^{p} {{D}_{i}}^{3} {f}_{i}}{{\sum }_{i = 1}^{p} \left[{\left({D}_{i}∼\overline{D}\right)}^{3}+\frac{1}{n}\left\{{\left({D}_{i}+\overline{D}\right)}^{3}-{\left({D}_{i}∼{D}^{˜}\right)}^{3}\right\}\right] {f}_{i}} \\ ε = 1 - {ϕ}_{m}\end{matrix}$ [Expression 2] ${f}_{i} = \left({w}_{i}/{{D}_{i}}^{3}\right) / {\sum }_{i = 1}^{m} \left({w}_{i}/{{D}_{i}}^{3}\right)$ [Expression 3] $\begin{matrix}\overline{D} = {\sum }_{i = 1}^{p} \left({D}_{i}{f}_{i}\right) / {\sum }_{i = 1}^{p} {f}_{i} \\ {D}_{i} ∼ \overline{D} = \left\{0:{D}_{i}\leq \overline{D}, {D}_{i}-\overline{D}:{D}_{i}>\overline{D}\right\}\end{matrix}$ [Expression 4] $n = 1 + \frac{4}{13} \overline{D} \frac{{\sum }_{i = 1}^{p} \left(7-8{ε}_{0 i}\right) {\left({D}_{i}+\overline{D}\right)}^{2} \left(1-\frac{3}{8}\frac{\overline{D}}{{D}_{i} + \overline{D}}\right) {f}_{i}}{{\sum }_{i = 1}^{p} \left\{{{D}_{i}}^{3}-{\left({D}_{i}∼\overline{D}\right)}^{3}\right\} {f}_{i}}$ [Expression 5] $\begin{matrix}{Φ}_{m} : maximum packing fraction & \\ Di : particle diameter & \overline{D} : average particle diameter \\ fi : \begin{matrix}number fraction of particles at each \\ particle diameter\end{matrix} & {w}_{i} : \begin{matrix}mass fraction of particles at each \\ particle diameter\end{matrix} \\ ε : porosity & {ε}_{0 i} : \begin{matrix}porosity in packing at a \\ uniform particle diameter\end{matrix}\end{matrix}$

The porosity of cBN particles calculated using the above Ouchiyama expressions is preferably 50% by volume or less, more preferably 45% by volume or less, even more preferably 40% by volume or less, even still more preferably 37% by volume or less, and particularly preferably 35% by volume or less.

When the porosity of cBN particles is the above-described upper limit or less, the cBN sintered body of the present embodiment tends to exhibit superior thermal conductivity, wear resistance, and chipping resistance.

While a lower porosity of the above cBN particles is preferable, it may be 10% by volume or more, 20% by volume or more, or 25% by volume or more, in view of ease of production.

A more detailed calculation method of the porosity of cBN particles, which is calculated using the above Ouchiyama expressions, is as described in Examples.

In view of reducing the porosity and further enhancing the thermal conductivity, wear resistance, and chipping resistance of the cBN sintered body, the cBN sintered body of the present embodiment preferably includes two or more types of cBN particles with different average particle diameters (D₅₀) from each other, and more preferably includes three or more types of cBN particles with different average particle diameters (D₅₀) from each other.

The number of cBN particle types with different average particle diameters (D₅₀) from each other included in the cBN sintered body of the present embodiment may be 6 or less, 5 or less, or 4 or less.

Herein, the average particle diameter (D₅₀) refers to the particle diameter at the cumulative volume of 50% in the volume-weighted particle size distribution measured by a laser diffraction and scattering method. The average particle diameter (D₅₀) can be measured by the method described in Examples.

Among two or more types of cBN particles with different average particle diameters (D₅₀) from each other, the difference in the average particle diameter (D₅₀) between the two types of cBN particles with the smallest difference in the average particle diameter (D₅₀) is preferably 0.5 to 3.0 µm, more preferably 1.0 to 2.0 µm, and even more preferably 1.4 to 1.8 µm.

Among two or more types of cBN particles with different average particle diameters (D₅₀) from each other, the difference in the average particle diameters (D₅₀) between the cBN particles with the largest average particle diameter (D₅₀) and the cBN particles with the smallest average particle diameter (D₅₀) is preferably 1.0 to 6.0 µm, more preferably 2.0 to 5.0 µm, and even more preferably 3.0 to 4.0 µm.

When including two or more types of cBN particles with different average particle diameters (D₅₀) from each other, the average particle diameter (D₅₀) of each of the two or more types of cBN particles is preferably selected from the range of preferably 0.1 to 10.0 µm, more preferably 0.4 to 7.0 µm, and even more preferably 0.6 to 5.0 µm.

In view of reducing the above porosity, it is preferable that two or more types of cBN particles with different average particle diameters (D₅₀) include, for example, two or three types among (1) cBN particles with an average particle diameter (D₅₀) of 0 µm or more and less than 2.0 µm, (2) cBN particles with an average particle diameter (D₅₀) of 2.0 µm or more and less than 4.0 µm, and (3) cBN particles with an average particle diameter (D₅₀) of 4.0 µm or more and less than 6.0 µm.

When the cBN particles (1), the cBN particles (2), and the cBN particles (3) are included, a content of the cBN particles (1) is preferably 5 to 35% by mass, more preferably 10 to 30% by mass, and even more preferably 15 to 25% by mass, with respect to the total content (100% by mass) of cBN particles.

When the cBN particles (1), the cBN particles (2), and the cBN particles (3) are included, a content of the cBN particles (2) is preferably 55 to 85% by mass, more preferably 60 to 80% by mass, and even more preferably 65 to 75% by mass, with respect to the total content (100% by mass) of cBN particles.

When the cBN particles (1), the cBN particles (2), and the cBN particles (3) are included, a content of the cBN particles (3) is preferably 2 to 25% by mass, more preferably 3 to 20% by mass, and even more preferably 5 to 15% by mass, with respect to the total content (100% by mass) of cBN particles.

### <Binder Phase>

The binder phase is a phase that constitutes to a balance excluding the cBN in the cBN sintered body of the present embodiment.

The binder phase includes one or more selected from the group consisting of a carbide of Ti, a nitride of Ti, a carbonitride of Ti, and a boride of Ti, and one or more selected from the group consisting of W₂B and W₂CoB₂.

In an X-ray diffraction pattern of the cBN sintered body of the present embodiment obtained using a CuKα radiation as a radiation source, the ratio of the sum of I_{B} and I_{C} to I_{A}, [(I_{B}+I_{C})/I_{A}], is 0.25 or more, wherein

I_{A} is an intensity of a diffraction peak assigned to a (111) plane of the cBN,

I_{B} is an intensity of a diffraction peak assigned to a (211) plane of the W₂B, and

I_{C} is an intensity of a diffraction peak with a greater intensity in diffraction peaks assigned to a (211) plane of the W₂CoB₂ and a (310) plane of the W₂CoB₂.

The cBN sintered body of the present embodiment, which has a ratio [(I_{B}+I_{C})/I_{A}] of 0.25 or more, has enhanced fracture toughness and exhibits superior chipping resistance. The reason for this is not certain, but it is presumed as follows.

Since the W₂B and W₂CoB₂ included in the cBN sintered body of the present embodiment can be easily formed from fine W sources, it is expected that a larger quantity of fine W₂B and W₂CoB₂ are included in the cBN sintered body of the present embodiment, which has a ratio [(I_{B}+I_{C})/I_{A}] of 0.25 or more. Since the W₂B and W₂CoB₂ possess properties that make crack propagation difficult, it is considered that the cBN sintered body of the present embodiment has superior fracture toughness and consequently superior chipping resistance.

The XRD patterns of the cBN sintered bodies for determining the intensities I_{A}, I_{B}, and I_{C}, of the above diffraction peaks and I_{D} described later can be obtained using the method described in Examples. The resulting XRD patterns of the cBN sintered bodies can be compared with an inorganic material database to qualitatively identify the components included and to determine the diffraction peak intensities specific to each component. The qualitative analysis and the determination of diffraction peak intensities can be performed using commercially available software. For example, "X' pert High Score Plus" produced by PANalytical Ltd. can be used as the software.

In some cases, W₂CoB₂ in the present embodiment may also be denoted as B₂CoW₂, instead of W₂CoB₂, in inorganic material databases. Furthermore, since the (211) plane of W₂CoB₂ and the (310) plane of W₂CoB₂ are similar in the appearance angle of the diffraction peak, there may be cases where it cannot be determined to which plane a peak is assigned though the peak is assigned to at least one of the (211) plane of W₂CoB₂ and the (310) plane of W₂CoB₂. In such cases, the peak shall be regarded as "the diffraction peak with the greater intensity in the diffraction peaks assigned to the (211) plane of W₂CoB₂ and the (310) plane of W₂CoB₂".

The ratio [(I_{B}+I_{C})/I_{A}] is preferably 0.30 to 4.00, more preferably 0.40 to 3.00, even more preferably 0.50 to 2.50, even still more preferably 0.60 to 2.00, further preferably 0.70 to 1.60, still further preferably 0.80 to 1.40, and particularly preferably 0.90 to 1.20, in view of further enhancing the fracture toughness, wear resistance, and chipping resistance of the cBN sintered body.

The ratio of the intensity I_{B} of the diffraction peak assigned to the W₂B (211) plane to the intensity I_{A} of the diffraction peak assigned to the cBN (111) plane, [I_{B}/I_{A}], is preferably 0.05 to 0.80, more preferably 0.10 to 0.60, and even more preferably 0.20 to 0.45, in view of further enhancing the fracture toughness, wear resistance, and chipping resistance of the cBN sintered body.

The ratio of the intensity I_{C} of the diffraction peak with the greater intensity in the diffraction peaks assigned to the W₂CoB₂ (211) plane and the W₂CoB₂ (310) plane to the intensity I_{A} of the diffraction peak assigned to the cBN (111) plane, [I_{C}/I_{A}], is preferably 0.20 to 1.50, more preferably 0.30 to 1.00, and even more preferably 0.40 to 0.80, in view of further enhancing the fracture toughness, wear resistance, and chipping resistance of the cBN sintered body.

The ratio of the intensity I_{B} of the diffraction peak assigned to the W₂B (211) plane to the intensity I_{C} of the diffraction peak with the greater intensity in the diffraction peaks assigned to the W₂CoB₂ (211) plane and the W₂CoB₂ (310) plane, [I_{B}/I_{C}], is preferably 0.20 to 1.00, more preferably 0.30 to 0.70, and even more preferably 0.40 to 0.50, in view of further enhancing the fracture toughness, wear resistance, and chipping resistance of the cBN sintered body.

The ratio of the intensity I_{D} of the diffraction peak assigned to the metal W (110) plane to the intensity I_{A} of the diffraction peak assigned to the cBN (111) plane, [I_{D}/I_{A}], is preferably 0.10 or less, more preferably 0.01 or less, even more preferably 0.001 or less, and particularly preferably 0, in view of further enhancing the fracture toughness, wear resistance, and chipping resistance of the cBN sintered body.

The content of W in the cBN sintered body of the present embodiment is preferably 4.00 to 15.00% by mass, more preferably 4.50 to 10.00% by mass, even more preferably 5.00 to 8.50% by mass, and even still more preferably 5.20 to 7.00% by mass, in view of further enhancing the wear resistance and chipping resistance of the cBN sintered body.

Herein, the contents of the elements, such as W and Co, Ti, and Al later described, are measured using energy dispersive X-ray spectroscopy analysis (EDS), and can be measured specifically using the method described in Examples.

The content of Co in the cBN sintered body of the present embodiment is preferably 0.05 to 2.00% by mass, more preferably 0.10 to 1.50% by mass, even more preferably 0.30 to 1.00% by mass, and even still more preferably 0.50 to 0.80% by mass, in view of further enhancing the wear resistance and chipping resistance of the cBN sintered body.

The type(s) of one or more selected from the group consisting of a carbide of Ti, a nitride of Ti, a carbonitride of Ti, and a boride of Ti, included in the binder phase can depend on the type of the binding material used. In the present embodiment, it is preferable to include one or more selected from the group consisting of the nitride of Ti and the boride of Ti, and it is more preferable to include one or more selected from the group consisting of TiN and TiB₂.

The content of Ti in the cBN sintered body of the present embodiment is preferably 4.00 to 15.00% by mass, more preferably 6.00 to 13.00% by mass, and even more preferably 8.00 to 12.00% by mass, in view of further enhancing the wear resistance and chipping resistance of the cBN sintered body.

It is preferable that the binder phase further include one or more selected from the group consisting of a nitride of Al, a boride of Al, and an oxide of Al. The type(s) of one or more selected from the group consisting of a nitride of Al, a boride of Al, and an oxide of Al can depend on the type of the binding material used. In the present embodiment, it is preferable to include one or more selected from the group consisting of the nitride of Al and the oxide of Al, and it is more preferable to include one or more selected from the group consisting of AlN and Al₂O₃.

The content of Al in the cBN sintered body of the present embodiment is preferably 1.00 to 6.00% by mass, more preferably 1.50 to 5.00% by mass, and even more preferably 2.00 to 4.00% by mass, in view of further enhancing the wear resistance and chipping resistance of the cBN sintered body.

Each compound constituting the binder phase can be qualitatively identified from the XRD pattern of the cBN sintered body, similarly to W₂B, W₂CoB₂, etc., described above.

The binder phase may include other compounds in addition to W₂B, W₂CoB₂, Ti compounds, and Al compounds described above. The binder phase may include: for example, complex oxides of Al and Ti; borides of transition metal elements of Groups 4 to 6, such as ZrB₂, ZrB₁₂, HfB₂, HfB, HfB₁₂, VB₂, V₃B₄, V₃B₁₂, VB, V₅B₆, V₂B₂, NbB₂, Nb₃B₂, NbB, TaB₂, Ta₂B, Ta₃B₂, TaB, Ta₃B₄, CrB, CrB₄, Cr₂B, Cr₂B₃, Cr₅B₃, CrB₂, MoB, Mo₂B₅, MoB₄, Mo₂B, MoB₂, WB, and WB₄; nitrides of transition metal elements of Groups 4 to 6, such as ZrNₓ (0<x≤1), Hf₃N₂, HfNₓ (0<x≤1), Hf₄N₃, VNₓ (0<x≤1), V₂N, NbN, Nb₄N₃, Nb₂N, TaNₓ (0<x≤1), Ta₃N₅, Ta₄N, Ta₂N, Cr₂N, CrNₓ (0<x≤1), WN, W₂N; and mutual solid solutions of compounds including those described above. However, it is preferable that the content of each transition metal element of Groups 4 to 6 other than Ti and W in the cBN sintered body be as low as possible. The content of each transition metal element of Groups 4 to 6 other than Ti and W is preferably 1,000 ppm by mass or less, and more preferably 100 ppm by mass or less.

The cBN sintered body of the present embodiment may contain unavoidable impurities derived from the raw material used. Examples of the unavoidable impurities include Li, Mg, Ca, Al, Si, Ti, C, B, S, P, Ga, Co, Ni, Mn, Fe, Cl, and W, as well as compounds thereof, and may also include those overlapping with the other compounds described above.

### <Vickers Hardness>

The Vickers hardness of the cBN sintered body of the present embodiment is preferably 3,000 HV or more, more preferably 3,200 HV or more, even more preferably 3,300 HV or more, even still more preferably 3,400 HV or more, and particularly preferably 3,450 HV or more, in view of suitably to use for machining or the like of high-hardness work materials.

While a higher Vickers hardness of the cBN sintered body of the present embodiment is preferable, it may be 5,000 HV or less, 4,000 HV or less, or 3,800 HV or less, in view of ease of production.

The Vickers hardness of the cBN sintered body can be measured using the method described in Examples.

### <Thermal Conductivity>

The thermal conductivity of the cBN sintered body of the present embodiment is preferably 50.0 W/m·K or more, more preferably 54.0 W/m·K or more, even more preferably 55.0 W/m·K or more, even still more preferably 56.0 W/m·K or more, and particularly preferably 58.0 W/m·K or more, in view of further enhancing the wear resistance and chipping resistance.

While a higher thermal conductivity of the cBN sintered body of the present embodiment is preferable, it may be 70.0 W/m·K or less, 67.0 W/m·K or less, or 65.0 W/m·K or less, in view of ease of production.

The thermal conductivity of the cBN sintered body can be measured using the method described in Examples.

### [Method for Producing cBN Sintered Body]

A method for producing the cBN sintered body of the present embodiment comprises:
a step of pulverizing a binding material as a raw material for forming the binder phase in a container containing pulverizing media;
a step of mixing the binding material after pulverizing and cubic boron nitride particles to obtain a raw material mixture; and
a step of sintering the raw material mixture by pressure-heating treatment, to obtain a cubic boron nitride sintered body;
wherein the pulverizing media used in the binding material pulverizing step comprises WC.

Hereinafter, each step of the method for producing the cBN sintered body of the present embodiment will be described.

### <Binding Material Pulverizing Step>

The binding material pulverizing step involves pulverizing the binding material in a container containing pulverizing media.

The binding material pulverized during the binding material pulverizing step preferably includes a raw material containing Ti, and may be the raw material containing Ti alone, or a mixture of the raw material containing Ti and a raw material other than the raw material containing Ti.

The raw material containing Ti may be either an elemental single substance or a compound.

Preferable examples of the raw material containing Ti include TiN and TiAl₃, and the raw material containing Ti more preferably includes both TiN and TiAl₃. The use of TiN and TiAl₃ as the raw material containing Ti allows for the generation of TiN, AlN, Al₂O₃, TiB₂, etc., in the binder phase.

The average particle diameter (D₅₀) of the raw material containing Ti used in the binding material pulverizing step is preferably 30.0 µm or less, more preferably 25.0 µm or less, and even more preferably 20.0 µm or less, in view of easily obtaining the desired particle diameter under appropriate pulverizing conditions. The average particle diameter (D₅₀) of the raw material containing Ti may be 0.1 µm or more, 0.3 µm or more, or 0.5 µm or more.

The average particle diameter (D₅₀) of TiN used in the binding material pulverizing step is preferably 2.5 µm or less, more preferably 2.0 µm or less, and even more preferably 1.5 µm or less, in view of easily obtaining the desired particle diameter under appropriate pulverizing conditions. The average particle diameter (D₅₀) of TiN may be 0.1 µm or more, 0.3 µm or more, or 0.5 µm or more.

The average particle diameter (D₅₀) of TiAl₃ used in the binding material pulverizing step is preferably 30.0 µm or less, more preferably 25.0 µm or less, and even more preferably 20.0 µm or less, in view of easily obtaining the desired particle diameter under appropriate pulverizing conditions. The average particle diameter (D₅₀) of TiAl₃ may be 1.0 µm or more, 5.0 µm or more, or 10.0 µm or more.

In the binding material pulverizing step, the binding material is pulverized in a container which contains pulverizing media including WC.

In the method for producing the cBN sintered body of the present embodiment, in which the binding material is pulverized with the pulverizing media including WC, WC derived from the pulverizing media is to be incorporated into the raw material. The WC changes to W₂B, W₂CoB₂, etc., through the subsequent sintering step, to obtain the cBN sintered body of the present embodiment. Therefore, it is preferable that conditions in the binding material pulverizing step in the production method of the present embodiment be adjusted so that favorable quantities of W₂B and W₂CoB₂ are formed. For example, when the pulverizing conditions in the binding material pulverizing step are more severe than conventional conditions, a larger quantity of fine WC derived from the pulverizing media is to be incorporated into the raw material, making it easier to form W₂B and W₂CoB₂.

The pulverizing media need to include WC. It is preferable to include Co with WC, and more preferable to include cemented carbide which contains both WC and Co.

The content of WC in the pulverizing media is preferably 70 to 97% by mass, more preferably 76 to 92% by mass, and even more preferably 82 to 88% by mass.

The content of Co in the pulverizing media is preferably 3 to 30% by mass, more preferably 8 to 24% by mass, and even more preferably 12 to 18% by mass.

The method for pulverizing in the binding material pulverizing step is not particularly limited as long as it uses pulverizing media. Examples thereof include ball mills and rod mills, and ball mills are preferable in view of productivity. Namely, it is preferable that the above pulverizing media be balls used for ball mills. Here, the ball mill herein may also be one referred to as a bead mill.

The ball mill may be a rotary ball mill, a vibrating ball mill, or one with a combination of rotation and vibration, and a rotary ball mill is preferable in view of productivity. The rotary ball mill can be either a conventional self-rotating ball mill or a planetary ball mill.

When using the ball mill, it is preferable that the material of a mill pot also include WC, more preferably Co with WC, and even more preferably cemented carbide which contains WC and Co. The suitable content of WC and Co in the mill pot material is equivalent to the pulverizing media case.

Diameters of the balls used in the ball mill are preferably 0.1 to 20.0 mm, more preferably 0.5 to 10.0 mm, and even more preferably 1.0 to 5.0 mm.

Pulverization using a ball mill can be performed in either dry or wet process, and the wet process is preferable in view of enabling more uniform pulverization. Examples of a dispersing medium for the wet process include acetone, hexane, 2-propanol, ethanol, and heptane. Among these, acetone is preferable. The dispersing mediums can be used singly or in combination of two or more thereof.

When performing wet pulverization in the binding material pulverizing step, the content of the objects to be pulverized in the slurry, which is obtained by mixing the objects to be pulverized including the binding material with the dispersing medium, is preferably 10 to 70% by mass, more preferably 20 to 60% by mass, and even more preferably 30 to 50% by mass.

The pulverization may be performed under an air atmosphere or in an inert gas atmosphere such as N₂ gas.

When using a rotary ball mill in the binding material pulverizing step, it is preferable that conditions including the pulverizing time, the rotational speed, the quantity of the ball loaded, and the quantity of the objects loaded to be pulverized should be appropriately determined depending on the pulverizing scale, the target particle diameter, and others.

The pulverizing time of the ball mill in the binding material pulverizing step using the rotary ball mill may be, for example, 3 to 7 hours.

The rotational speed of the ball mill in the binding material pulverizing step using the rotary ball mill may be, for example, 150 to 300 rpm.

In the binding material pulverizing step using the rotary ball mill, the quantity of the ball placed and loaded in a mill pot may be, for example, 15 to 35% by volume with respect to the internal volume of the mill pot.

In the binding material pulverizing step using the rotary ball mill, the quantity of the objects placed and loaded to be pulverized in the mill pot may be, for example, 20 to 40% by volume with respect to the internal volume of the mill pot.

The pulverization in the pulverizing step may be performed only once or, if necessary, two or more times.

The average particle diameter (D₅₀) of the binding material after pulverizing obtained through the binding material pulverizing step is preferably 0.10 to 2.5 µm, more preferably 0.30 to 1.8 µm, and even more preferably 0.50 to 1.1 µm, in view of homogenizing the composition of the cBN sintered body.

### <Mixing Step>

The mixing step involves mixing the binding material after pulverizing and cBN particles to obtain a raw material mixture.

The cBN particles suitably used are those obtained by finely pulverizing cBN with a purity of 99.9% or more obtained by ultra-high pressure and temperature synthesis of, for example, 3 GPa or more and 1,200°C or more to adjust the particle diameter and shape.

The preferable average particle diameter (D₅₀) of cBN particles is as described in the section of the above [cBN].

The quantity of cBN particles to be mixed is preferably such that the cBN content in the resulting cBN sintered body falls within the above-described suitable range.

The mixing step preferably involves mixing the raw material including the pulverized binding material and the cBN particles in a container containing the pulverizing media.

The mixing method in the mixing step may be the same method as the pulverizing methods described for the binding material pulverizing step, and the preferable modes are also the same. Namely, the mixing in the mixing step is preferably performed using a rotary ball mill. When the mixing using a rotary ball mill is performed in a wet process, the content of the raw material in the slurry obtained by mixing the raw material and a dispersing medium is preferably 50 to 80% by mass, more preferably 55 to 75% by mass, and even more preferably 60 to 70% by mass.

The mixing may be performed under an air atmosphere or under an inert gas atmosphere such as N₂ gas.

When using a rotary ball mill in the mixing step, it is preferable that conditions including the mixing time, the rotational speed, the quantity of the ball loaded, and the quantity of the objects loaded to be mixed should be appropriately determined depending on the mixing scale and others.

The mixing time of the ball mill in the mixing step using the rotary ball mill may be, for example, 2 to 6 hours.

The rotational speed of the ball mill in the mixing step using the rotary ball mill may be, for example, 100 to 200 rpm.

In the mixing step using the rotary ball mill, the quantity of the ball placed and loaded in the mill pot may be, for example, 25 to 40% by volume with respect to the internal volume of the mill pot.

In the mixing step using the rotary ball mill, the quantity of the raw material placed and loaded in the mill pot may be, for example, 40 to 60% by volume with respect to the internal volume of the mill pot.

### <Heat Treatment Step>

The raw material mixture obtained through the mixing step may be subjected to heat treatment for degassing as needed and can also be used as a raw material mixture after the heat treatment.

The temperature of the heat treatment for the degassing is preferably 800°C or less, in view of ensuring uniform progress of reaction/sintering of the binder phase and densifying the sintered body.

In view of sufficiently removing impurity components such as organic matters and densifying the cBN sintered body, it is preferable that the temperature of the heat treatment be 500°C or more.

From the above viewpoints, the heat treatment temperature is more preferably 550 to 750°C, and even more preferably 600 to 700°C.

In view of efficiently performing degassing, the heat treatment is preferably performed under a vacuum atmosphere, and is preferably performed at a pressure of 1.0×10⁻³ Pa or less.

The time of the heat treatment is appropriately set depending on the quantity of the raw material mixture to be treated, the type of a dispersing medium used in the mixing step, and others, and is usually 0.1 to 10 hours, and preferably 1 to 3 hours.

### <Sintering Step>

The sintering step involves subjecting the raw material mixture obtained in the mixing step to pressure-heating treatment to produce a cubic boron nitride sintered body. The raw material mixture obtained in the mixing step may be either the raw material mixture after the heat treatment obtained in the heat treatment step or the raw material mixture obtained without performing the heat treatment step.

The highest temperature in the pressure-heating treatment is preferably 1,200 to 1,600°C, more preferably 1,250 to 1,550°C, and even more preferably 1,300 to 1,500°C, in view of densifying the cBN sintered body.

The highest pressure in the pressure-heating treatment is preferably 3.0 GPa or more, more preferably 3.5 GPa or more, and even more preferably 4.0 GPa or more, in view of densifying the cBN sintered body. The highest pressure in the pressure-heating treatment may be 7.0 GPa or less, 6.0 GPa or less, or 5.0 GPa or less.

The atmosphere in the pressure-heating treatment is preferably an inert gas atmosphere in view of suppressing oxidation of the raw material mixture in the pressure-heating treatment and producing the desired cBN sintered body. Examples of inert gases include Ar gas and N₂ gas. These gases can be used singly or in combination of two or more thereof.

### <Tool>

A tool of the present embodiment comprises the cBN sintered body of the present embodiment as a constituent material.

The cBN sintered body of the present embodiment, which has high hardness, and superior wear resistance and chipping resistance as described above, is a suitable material for tools, particularly tools for machining or grinding.

### Examples

Hereinafter, the present embodiment will be described by way of Examples, but the present embodiment is not limited to Examples.

### [Method for Measuring Average Particle Diameter (D₅₀), 10% Particle Diameter (D₁₀), and 90% Particle Diameter (D₉₀)]

The particle size distribution of the particles was measured using a particle size distribution analyzer ("LA-920", produced by HORIBA, Ltd.). In the obtained particle size distribution, the 10% particle diameter (D₁₀), which is at a cumulative volume of 10%, the average particle diameter (D₅₀), and the 90% particle diameter (D₉₀), which is at a cumulative volume is 90%, were measured.

### [Method for Calculating Porosity of cBN Particles]

The porosity of cBN particles was calculated using the Ouchiyama expressions described above.

In the Ouchiyama expressions, the particle diameter (Dᵢ) refers to the particle size of cBN particles obtained using the above [Method for Measuring Average Particle Diameter (D₅₀)], and the average particle diameter (D with upper bar) is the average particle diameter (D₅₀) of the cBN particle obtained using the above [Method for Measuring Average Particle Diameter (D₅₀)]. The number fraction (fᵢ) of particles at each particle diameter and the mass fraction (wᵢ) of particles at each particle diameter are values obtained from the particle size distribution of cBN particles, and the porosity (ε₀ᵢ) in packing at a uniform particle diameter is a value calculated assuming that cBN particles having each particle diameter are spherical. When mixing two or more types of cBN particles, the above parameters can be calculated based on the particle size distributions and the quantities of the two or more types of cBN particles to be mixed.

### [Method for Measuring cBN Content and Feret Diameter]

Backscattered electron images were captured at ×5,000 magnifications using a scanning electron microscope (SEM) ("S-5500", produced by Hitachi High-Tech Corporation) on the cBN sintered body sample for evaluation obtained in each Example as the measurement target. The captured images contained black, white, and gray parts, and as a result of performing energy dispersive X-ray spectrometry (EDS) analysis of each part, it was confirmed that the black parts corresponded to cBN, and that the white and gray parts corresponded to the binder phase.

The captured images were binarized using image processing software to identify the black parts corresponding to cBN and the white parts corresponding to the binder phase. The proportion of the area of the black parts occupied in the entire field of view of the binarized image was calculated, and the arithmetic mean value thereof with respect to the three fields of view was used as the content of the cBN (unit: % by volume).

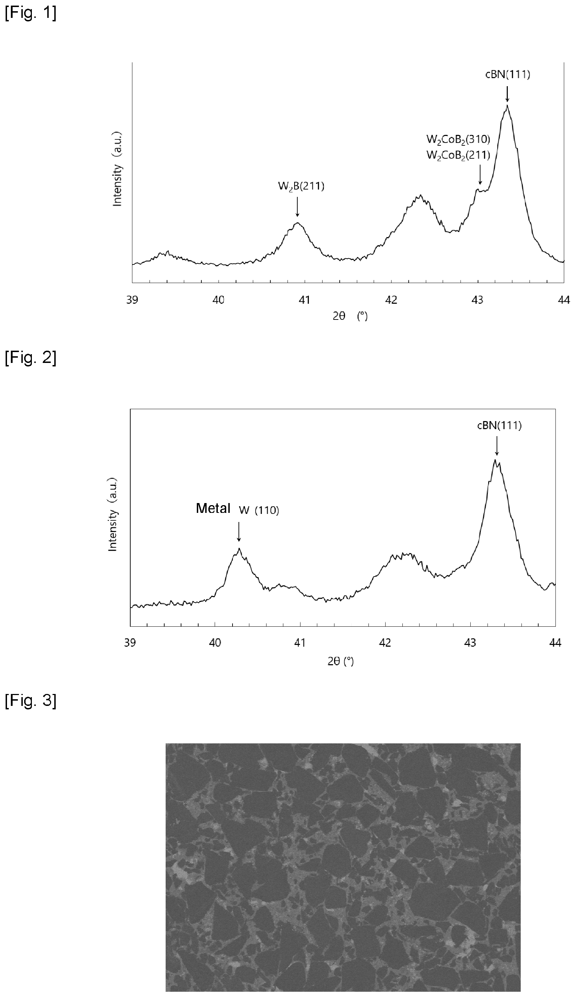

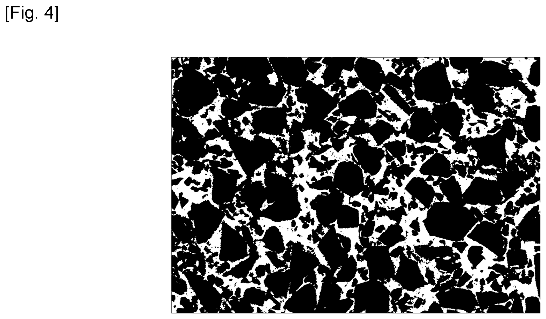

As a typical example, Fig. 3 shows the backscattered electron image of the sintered body of Example 1, and Fig. 4 shows the binarized image thereof. The dimensions of a single field of view were 25.0 µm in width and 17.4 µm in height, and the total area of the three fields of view is 1305.0 µm².

Furthermore, for the entire field of view of the binarized image of the backscattered electron image captured at ×5,000 magnification, the feret diameters of all measurable cBN were determined using the image processing software, and the arithmetic mean value thereof was used as the cBN feret diameter (unit: µm).

### [Elemental Analysis]

Energy dispersive X-ray spectroscopy (EDS) was performed on the cBN sintered body sample for evaluation obtained in each Example as the measurement target, and the elemental concentrations of B, N, O, C, Al, Ti, Co, and W within the cBN sintered body were measured. The element concentrations were measured across the entire field of view observed under the conditions described below and averaged over 10 fields of view. The EDS measurement conditions are as follows.
Measurement system: JSM-6510LA (JEOL Ltd.)
EDS analysis software: Analysis Station (JOEL Ltd.)
Accelerating voltage: 20.0 kV (irradiation current: 1.00000 nA)
Magnification: ×2,000
Energy range: 0 to 20 keV

### [Method for Analyzing Composition of Sintered Body]

XRD measurement was performed using an X-ray diffractometer ("X' pert PRO", produced by PANalytical Ltd.) on the cBN sintered body sample for evaluation obtained in each Example as the measurement target. Measurement was performed under the following conditions: a Cu Kα radiation, an output voltage of 40 kV, an output current of 40 mA, a sampling width of 0.0167°, a scanning speed of 0.4178°/s, and a measurement range of 2θ = 10 to 80°.

The resulting XRD pattern was analyzed qualitatively by comparing it with the inorganic material database using the software "X' pert High Score Plus", produced by PANalytical Ltd. The components detected by XRD analysis are shown in " Composition of Sintered Body " of Table 1.

### [Method for Measuring Diffraction Peak Intensity Ratio]

In the XRD patterns described in the section of the above [Method for Analyzing Sintered Body Composition]: the intensity of the diffraction peak assigned to the cBN (111) plane near 2θ = 43.30° is denoted as I_{A}; the intensity of the diffraction peak assigned to the W₂B (211) plane near 2θ = 40.90° is denoted as I_{B}; the intensity of the diffraction peak with the greater intensity in the diffraction peaks assigned to the W₂CoB₂ (211) plane and the W₂CoB₂ (310) plane near 2θ = 43.10° is denoted as I_{C}; and the intensity of the diffraction peak assigned to the (110) plane of metallic W near 2θ = 40.30° is denoted as I_{D}; and then the respective diffraction peak intensity ratios [I_{B}/I_{A}], [I_{C}/I_{A}], [I_{B}/I_{C}], [I_{D}/I_{A}], and [(I_{B}+I_{C})/I_{A}] were calculated.

As typical examples, Fig. 1 shows the XRD pattern of the cBN sintered body obtained in Example 1 in the range of 2θ = 39° to 44°, and Fig. 2 shows the XRD pattern of the cBN sintered body obtained in Comparative Example 2 in the range of 2θ = 39° to 44°.

### [Production of Cubic Boron Nitride Sintered Body]

### Examples 1 to 3

### (Binding Material Pulverizing Step)

In a mill pot of a planetary ball mill (product name: "Planetary Ball Mill", produced by Fritsch GmbH), 7.7 g of TiN (average particle diameter (D₅₀) = 1.2 µm), 2.6 g of TiAl₃ (average particle diameter (D₅₀) = 19.8 µm), 21 mL of a dispersing medium (acetone), and 161 g of balls were placed, and pulverization was performed under the following pulverizing conditions. Here, both the mill pot and the balls of the planetary ball mill were made of cemented carbide (constituent components: approximately 85% by mass of WC content, approximately 15% by mass of Co content); the cylindrical mill pot was 23 mm in height and φ65 mm in inner diameter, and the ball was 1.3 mm in diameter.

### <Binding Material Pulverizing Conditions>

·Quantity of raw material (slurry) loaded: approximately 32% by volume with respect to the internal volume of the mill pot
·Quantity of balls loaded: approximately 24% by volume with respect to the internal volume of the mill pot
·Atmosphere: air atmosphere
·Rotational speed: 270 rpm
·Pulverizing time: 5 hours

### (Mixing Step of cBN Particles and Binding Material)

In the mill pot after completing the above binding material pulverizing step, 31 g of cBN particles listed in Table 1, 8 mL of a dispersing medium (acetone), and 54 g of balls (ball diameter 3.0 mm) were additionally placed, and mixing was performed under the following mixing conditions, to obtain a slurry of a raw material mixture. The material of the balls was the same as that of the balls used in the binding material pulverizing step.

### <Mixing Conditions of cBN Particles and Binding Material>

·Quantity of raw material (slurry) loaded: approximately 54% by volume with respect to the internal volume of the mill pot
·Quantity of Balls loaded: approximately 32% by volume with respect to the internal volume of the mill pot
·Atmosphere: N₂ gas atmosphere
·Rotational speed: 140 rpm
·Mixing time: 4 hours

Here, details of cBN particles (1) to (3) shown in Table 1 are as follows.
The cBN particles (1): a 10% particle diameter (D₁₀) = 0.56 µm, an average particle diameter (D₅₀) = 0.86 µm, a 90% particle diameter (D₉₀) = 1.49 µm
The cBN particles (2): a 10% particle diameter (D₁₀) = 1.92 µm, an average particle diameter (D₅₀) = 2.93 µm, a 90% particle diameter (D₉₀) = 4.31 µm
The cBN particles (3): a 10% particle diameter (D₁₀) = 3.06 µm, an average particle diameter (D₅₀) = 4.60 µm, a 90% particle diameter (D₉₀) = 6.42 µm

### (Heat Treatment Step)

The slurry obtained above was dried by standing at 70°C for 5 hours in an N₂ gas atmosphere, and then heat-treated at 650°C for 0.5 hours in a vacuum atmosphere at 1.0×10⁻³ Pa or less to degas and obtain heat-treated powder.

### <Sintering Step>

In an N₂ gas atmosphere, the above-described heat-treated powder was layered onto a cemented carbide support plate, and then subjected to pressure-heating treatment at 4.5 GPa and 1,500°C for one hour, to prepare a cBN sintered body (approximately 30 mm in diameter and 4 mm in thickness). The top surface of the cBN sintered body (the bottom surface was the surface in contact with the cemented carbide support plate) was ground using a #400 diamond grinding wheel to prepare a cBN sintered body sample for evaluation.

### Example 4

### (Binding Material Pulverizing Step)

In the mill pot of the planetary ball mill (product name: "Planetary Ball Mill", produced by Fritsch GmbH), 0.9 g of TiN (average particle diameter (D₅₀) = 1.2 µm), 5.8 g of TiC (average particle diameter (D₅₀) = 0.70 µm), 3.6 g of TiAl₃ (average particle diameter (D₅₀) = 19.8 µm), 21 mL of a dispersing medium (acetone), and 161 g of balls were placed, and pulverization was performed under the same conditions as the binding material pulverizing conditions in Example 1. Here, the specifications of the planetary ball mill and the balls were the same as those in Example 1.

### (Mixing Step of cBN Particles and Binding Material)

In the mill pot after completing the above binding material pulverizing step, 31 g of cBN particles as listed in Table 1, 8 mL of a dispersing medium (acetone), and 54 g of balls (ball diameter 3.0 mm) were additionally placed, and mixing was performed under the same conditions as the mixing conditions for the cBN particles and the binding material in Example 1, to obtain a slurry of a raw material mixture. The material of the balls was the same as that of the balls used in the binding material pulverizing step.

### (Heat Treatment Step and Sintering Step)

Using the slurry obtained above, the heat treatment step and the sintering step were performed under the same conditions as Example 1, thereby obtaining a cBN sintered body sample for evaluation.

### Example 5

### (Binding Material Pulverizing Step)

In the mill pot of the planetary ball mill (product name: "Planetary Ball Mill", produced by Fritsch GmbH), 9.3 g of TiN (average particle diameter (D₅₀) = 1.2 µm, 3.1 g of TiAl₃ (average particle diameter (D₅₀) = 19.8 µm), 21 mL of a dispersing medium (acetone), and 161 g of balls were placed, and pulverization was performed under the same conditions as the binding material pulverizing conditions in Example 1. Here, the specifications of the planetary ball mill and the balls were the same as those in Example 1.

### (Mixing Step of cBN Particles and Binding Material)

In the mill pot after completing the above binding material pulverizing step, 28.9 g of cBN particles as listed in Table 1, 8 mL of a dispersing medium (acetone), and 54 g of balls (ball diameter 3.0 mm) were additionally placed, and mixing was performed under the same conditions as the mixing conditions of cBN particles and the binding material in Example 1, to obtain a slurry of a raw material mixture. The material of the balls was the same as that of the balls used in the binding material pulverizing step.

### (Heat Treatment Step and Sintering Step)

Using the slurry obtained above, the heat treatment step and the sintering step were performed under the same conditions as Example 1, thereby obtaining a cBN sintered body sample for evaluation.

### Example 6

### (Binding Material Pulverizing Step)

In the mill pot of the planetary ball mill (product name: "Planetary Ball Mill", produced by Fritsch GmbH), 10.8 g of TiN (average particle diameter (D₅₀) = 1.2 µm), 3.7 g of TiAl₃ (average particle diameter (D₅₀) = 19.8 µm), 21 mL of a dispersing medium (acetone), and 161 g of balls were placed, and pulverization was performed under the same conditions as the binding material pulverizing conditions in Example 1. Here, the specifications of the planetary ball mill and the balls were the same as those in Example 1.

### (Mixing Step of cBN Particles and Binding Material)

In the mill pot after completing the above binding material pulverizing step, 26.8 g of cBN particles as listed in Table 1, 8 mL of a dispersing medium (acetone), and 54 g of balls (ball diameter 3.0 mm) were additionally placed, and mixing was performed under the same conditions as the mixing conditions of cBN particles and the binding material in Example 1, to obtain a slurry of a raw material mixture. The material of the balls was the same as that of the balls used in the binding material pulverizing step.

### (Heat Treatment Step and Sintering Step)

Using the slurry obtained above, the heat treatment step and the sintering step were performed under the same conditions as Example 1, thereby obtaining a cBN sintered body sample for evaluation.

### Example 7

### (Binding Material Pulverizing Step)

In the mill pot of the planetary ball mill (product name: "Planetary Ball Mill", produced by Fritsch GmbH), 12.3 g of TiN (average particle diameter (D₅₀) = 1.2 µm), 4.2 g of TiAl₃ (average particle diameter (D₅₀) = 19.8 µm), 21 mL of a dispersing medium (acetone), and 161 g of balls were placed, and pulverization was performed under the same conditions as the binding material pulverizing conditions in Example 1. Here, the specifications of the planetary ball mill and the balls were the same as those in Example 1.

### (Mixing Step of cBN Particles and Binding Material)

In the mill pot after completing the above binding material pulverizing step, 24.8 g of cBN particles as listed in Table 1, 8 mL of a dispersing medium (acetone), and 54 g of balls (ball diameter 3.0 mm) were additionally placed, and mixing was performed under the same conditions as the mixing conditions of cBN particles and the binding material in Example 1, to obtain a slurry of a raw material mixture. The material of the balls was the same as that of the balls used in the binding material pulverizing step.

### (Heat Treatment Step and Sintering Step)

Using the slurry obtained above, the heat treatment step and the sintering step were performed under the same conditions as Example 1, thereby obtaining a cBN sintered body sample for evaluation.

### Comparative Example 1

A cBN sintered body and a cBN sintered body sample for evaluation were obtained in the same manner as Example 1, except that the type of the cBN particles, and the quantities of cBN particles, TiN, and TiAl₃ used were changed to the type listed in Table 1, 26.1 g, 9.1 g, and 4.9 g, respectively, and that the quantity of balls placed and the pulverizing time in the binding material pulverizing step were changed to 107 g and 4 hours, respectively.

### Comparative Example 2

A cBN sintered body and a cBN sintered body sample for evaluation were obtained in the same manner as Example 1, except that the quantity of balls placed in the binding material pulverizing step, the ball diameter, and the pulverizing time in the binding material pulverizing step were changed to 107 g, 3.0 mm, and 4 hours, respectively, and that the balls were not placed additionally in the mixing step of cBN particles and the binding material.

### Comparative Example 3

### (Binding Material Pulverizing Step)

In the mill pot of the planetary ball mill (product name: "Planetary Ball Mill", produced by Fritsch GmbH), 14.4 g of TiN (average particle diameter (D₅₀) = 1.2 µm), 4.2 g of TiC (average particle diameter (D₅₀) = 0.70 µm), 7.4 g of TiAl₃ (average particle diameter (D₅₀) = 19.8 µm), 15.3 g of cBN particles listed in Table 1, 21 mL of a dispersing medium (acetone), and 107 g of balls (ball diameter 3.0 mm) were placed, and pulverization and mixing were performed under the following conditions, to obtain a slurry of a raw material mixture. Here, the specifications of the planetary ball mill and the balls are equivalent to those in Example 1.

### <Pulverizing and Mixing Conditions>

·Quantity of raw material (slurry) loaded: approximately 54% by volume with respect to the internal volume of the mill pot
·Quantity of balls loaded: approximately 24% by volume with respect to the internal volume of the mill pot
·Atmosphere: air atmosphere
·Rotational speed: 190 rpm
·Pulverizing and mixing time: 6 hours

### (Heat Treatment Step and Sintering Step)

Using the slurry obtained above, the heat treatment step and the sintering step were performed under the same conditions as Example 1, thereby obtaining a cBN sintered body sample for evaluation.

### [Evaluation Method]

The following various evaluations were performed on the cBN sintered body sample for evaluation obtained in each Example. Table 1 shows the evaluation results all together.

### <Method for Measuring Vickers Hardness>

In accordance with JIS Z 2244:2009, Vickers hardness of the cBN sintered body sample for evaluation obtained in each Example was measured using the product name "HMV-G21" (produced by Shimadzu Corporation) as the measuring apparatus, under the following conditions: a load of 9.8 N, a holding time of 15 seconds, and a temperature of 25°C.

### <Method for Measuring Thermal Conductivity>

A thermal conductivity measurement sample (thickness: 0.80 mm, diameter: 10.0 mmΦ) was cut from the cBN sintered body sample for evaluation, and the surfaces of the obtained sample were blackened using black spray. With the thickness direction of this sample serving as the heat flow direction, the thermal diffusivity was measured using a laser flash analyzer (product name "LFA457" produced by NETZSCH Geratebau GmbH). The specific heat of the sample was also measured using the same apparatus. Furthermore, the density of the sample was calculated from its dimensions and weight. From these results, the thermal conductivity of the cBN sintered body sample for evaluation in the thickness direction was calculated using the following equation: 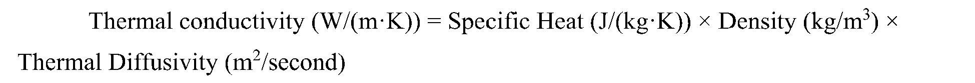 Thermal conductivity (W/(m·K)) = Specific Heat (J/(kg·K)) × Density (kg/m3) × Thermal Diffusivity (m2/second)

### <Method for Measuring Fracture Toughness Value>

The fracture toughness value was determined using the IF method (indentation fracture method) in accordance with JIS R 1607:2015 "Testing methods for fracture toughness of fine ceramics at room temperature". Using the product name "HMV-G21" (produced by Shimadzu Corporation) as the measuring apparatus, fracture toughness testing was performed for ten cBN sintered body samples for evaluation under the following conditions: a maximum load of 9.8 N, an indentation time of 5 seconds, and a temperature of 25°C; and the arithmetic mean value was taken as the fracture toughness value.

### <Machining Evaluation 1>

A cutting tool was prepared according to ISO standard CNGA120404 from the cBN sintered body obtained in each Example. The resulting cutting tool was used to perform a machining test on work materials under the following cutting conditions. The maximum number of work materials to be machined was set to 1,500, and the number of work materials machined until chipping of the cutting tool occurred was used as a measure of the chipping resistance. For the cutting tool that machined 1,500 work materials, the amount of wear of the cutting tool was measured after machining 1,500 work materials.

### (Cutting Conditions)

·Cutting speed: 145 m/minute
·Machining allowance: Φ0.33 mm
·Feed rate: 0.20 (mm/rev)
·Type of work material: austenitic sintered alloy
·Testing environment temperature: 25°C

### <Machining Evaluation 2>

A cutting tool was prepared according to ISO standard CNGA120404 (cutting edge shape: sharp edge) from the cBN sintered body obtained in each Example. The resulting cutting tool was used to perform a machining test on work materials under the following cutting conditions, to measure the amount of VB wear (mm) of the cutting tool after the machining evaluation.

### (Cutting Conditions)

·Cutting method: continuous machining (dry)
·Cutting speed: 400 m/minute
·Depth of cut: 0.2 mm
·Feed rate: 0.2 (mm/rev)
·Machined length: 330 m/pass
·Type of work material: FC250 (round rod of cast iron, hardness of HB190)
·Testing environment temperature: 25°C

### <Machining Evaluation 3>

A cutting tool was prepared according to ISO standard CNGA120404 (cutting edge shape: sharp edge) from the cBN sintered body obtained in each Example. The resulting cutting tool was used to perform a machining test on work materials under the following cutting conditions, to measure the number of intermittent impacts until chipping of the cutting tool occurred.

### (Cutting Conditions)

·Cutting method: intermittent machining (dry)
·Cutting speed: 150 m/minute
·Depth of cut: 0.2 mm
·Feed rate: 0.15 (mm/rev)
·Machined length: 150 m/pass
·Type of work material: SCM415 (8 grooves) (hardened steel, hardness of HRC62 to 60)
·Testing environment temperature: 25°C

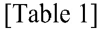

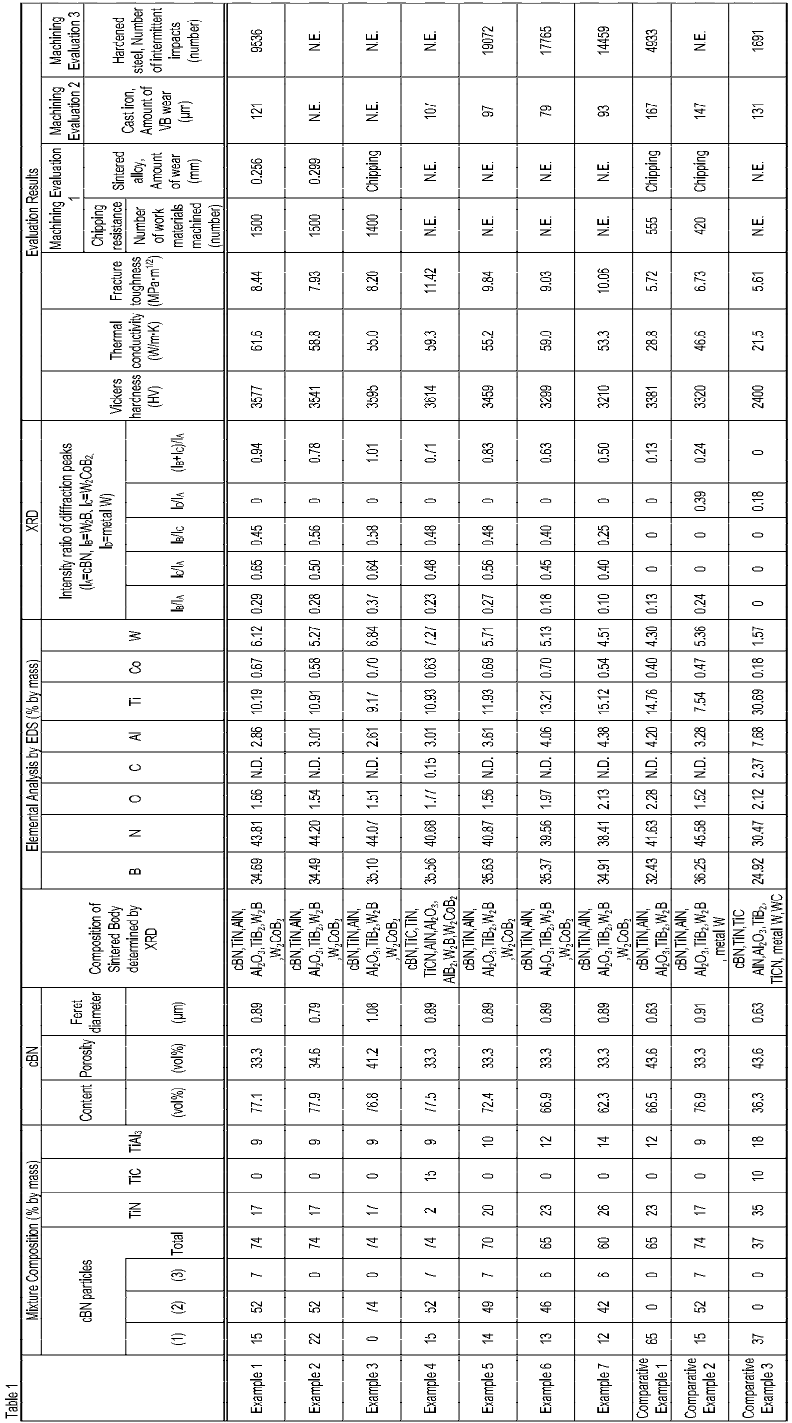

In Table 1, "N. D." is the abbreviation for "not detected".

In Table 1, "N. E." is the abbreviation for "not evaluated".

As shown in Table 1, the cBN sintered bodies of Examples 1 to 7 of the present embodiment exhibit superior chipping resistance.

## Claims

1. A cubic boron nitride sintered body comprising cubic boron nitride and a binder phase constituting a balance excluding the cubic boron nitride,
a content of the cubic boron nitride in the cubic boron nitride sintered body being 50.0 to 90.0% by volume,
the binder phase comprising one or more selected from the group consisting of a carbide of Ti, a nitride of Ti, a carbonitride of Ti, and a boride of Ti, and one or more selected from the group consisting of W₂B and W₂CoB₂, and
a ratio of a sum of I_{B} and I_{C} to I_{A}, [(I_{B}+I_{C})/I_{A}], being 0.25 or more in an X-ray diffraction pattern of the cubic boron nitride sintered body obtained using a CuKα radiation as a radiation source, wherein
I_{A} is an intensity of a diffraction peak assigned to a (111) plane of the cubic boron nitride,
I_{B} is an intensity of a diffraction peak assigned to a (211) plane of the W₂B, and
I_{C} is an intensity of a diffraction peak with a greater intensity in diffraction peaks assigned to a (211) plane and a (310) plane of the W₂CoB₂.

2. The cubic boron nitride sintered body according to claim 1, wherein a content of W in the cubic boron nitride sintered body is 4.00 to 15.00% by mass.

3. The cubic boron nitride sintered body according to claim 1 or 2, wherein a ratio of I_{B} to I_{C}, [I_{B}/I_{C}], is 0.20 to 1.00.

4. The cubic boron nitride sintered body according to claim 1 or 2, comprising two or more types of cubic boron nitride particles with different average particle diameters (D₅₀).

5. The cubic boron nitride sintered body according to claim 1 or 2, wherein the cubic boron nitride sintered body has a thermal conductivity of 50.0 W/m·K or more.

6. A tool comprising the cubic boron nitride sintered body according to claim 1 or 2, as a constituent material.

7. The tool according to claim 6 for machining or grinding.

8. A method for producing the cubic boron nitride sintered body according to claim 1 or 2, comprising:
a step of pulverizing a binding material as a raw material for forming the binder phase in a container containing pulverizing media;
a step of mixing the binding material after pulverizing and cubic boron nitride particles to obtain a raw material mixture; and
a step of sintering the raw material mixture by pressure-heating treatment, to obtain a cubic boron nitride sintered body;
wherein the pulverizing media used in the binding material pulverizing step comprises WC.
